# EUROPÄISCHE PATENTSCHRIFT

(11) **EP 0 831 444 B1**
(45) Veröffentlichungstag und Bekanntmachung des Hinweises auf die Patenterteilung: **28.04.1999**
(21) Anmeldenummer: 97115242.6
(22) Anmeldetag: 03.09.1997
(51) Int. Cl.: G09B 9/05, G09B 9/052

(54) **Verfahren und Anlage zur Erfassung des Verhaltens eines Fahrschülers**
Method and apparatus for determining the behaviour of a trainee driver
Procédé et installation pour déterminer le comportement d'un apprenti conducteur

(30) Priorität: 16.09.1996 CH 2263/96
(43) Veröffentlichungstag der Anmeldung: 25.03.1998
(73) Patentinhaber: Oerlikon Contraves AG, 8050 Zürich (CH)
(72) Erfinder: Dueringer, Heinrich, CH-8156 Oberhasli, Schweiz (CH); Thoeni, Urban, Dr., 8308 Illnau (CH)
(74) Vertreter: Hotz, Klaus, Dipl.-El.-Ing./ETH Patentanwalt

(56) Entgegenhaltungen:
- EP-A- 0 423 934
- EP-A- 0 468 554
- EP-A- 0 483 991
- EP-A- 0 525 961
- EP-A- 0 680 029
- WO-A-91/11792
- WO-A-92/02916
- WO-A-93/24915
- GB-A- 2 099 964
- NL-A- 9 100 838
- "DRIVING SIMULATION AT FORD" AUTOMOTIVE ENGINEERING, Bd. 102, Nr. 9, 1.September 1994, Seiten 37-40, XP000469064
- DEMMLER A: "DRIVING SIMULATOR SOFTWARE" AUTOMOTIVE ENGINEERING, Bd. 104, Nr. 4, 1.April 1996, Seiten 48,-51, XP000583606
- "DRIVING SIMULATION AT GENERAL MOTORS" AUTOMOTIVE ENGINEERING, Bd. 102, Nr. 9, 1.September 1994, Seiten 14-19, XP000469061

## Beschreibung

Die Erfindung betrifft ein Verfahren nach dem Oberbegriff des Patentanspruchs **1** und eine Anlage nach dem Oberbegriff des Patentanspruchs **6**.

Während langer Zeit war es üblich, das Führen motorisierter, erdgebundener Fahrzeuge unmittelbar im Gelände bzw. auf den Strasse und damit im Verkehr zu erlernen, wobei sich die Fahrschüler im allgemeinen mindestens während eines Teils der Lemzeit durch einen professionellen Instruktor unterrichten liessen. In neuerer Zeit ist insbesondere die Schwierigkeit, das Führen eines Motorfahrzeuges in einem Schulfahrzeug und der Strasse zu erlernen infolge des stets grösser werdenden Verkehrsaufkommens stark angestiegen; das Ausweichen in Gebiete mit tiefem Verkehrsaufkommen ist, ausser zu Beginn des Unterrichts, nicht sinnvoll, da neben der Beherrschung des Fahrzeuges und dem richtigen Manövrierverhalten eben gerade das Verhalten im tatsächlich vorhandenen Strassenverkehr erlernt bzw. geübt werden muss. Die Fahrschüler haben, wie die meisten anderen Verkehrsteilnehmer, das Bestreben, Unfälle zu vermeiden, was zur Folge hat, dass sie sich im Bewusstsein ihrer mangelnden Fähigkeiten gehemmt verhalten und sich - obwohl sie sich im tatsächlichen Strassenverkehr befinden nicht natürlich verhalten, was sich natürlich negativ auf das Lernverhalten und die Lerngeschwindigkeit auswirkt. Die Erteilung von Fahrunterricht auf Geländefahrzeugen in der freien Natur hat ausserdem zur Folge, dass grosse Flurschäden entstehen. Neben diesen Nachteilen, d.h. der Unfallgefahr, der unerwünschten Tatsache, dass sich Fahrschüler als Verkehrsbehinderung auswirken und ggfs. der Verursachung von Flurschäden, besteht ein weiterer Nachteil, das Führen eines motorisierten Fahrzeuges in herkömmlicher Weise zu erlernen, in den verhältnismässig hohen Kosten, die sich durch die Abnützung des Schulfahrzeuges, den Treibstoffverbrauch und insbesondere den Zeitaufwand des Instruktors ergeben. Schliesslich ist es nicht nur aus ökonomischen sondern auch aus ökologischen Gründen erwünscht, den Treibstoffverbrauch der Fahrschüler zu reduzieren.

Es wird daher schon seit längerer Zeit versucht, den Unterricht der Fahrschüler nicht in Schulfahrzeugen auf der Strasse oder im Gelände sondern in Anlagen mit Trainingsstationen, d.h. in sogenannten Simulatoren, abzuhalten. Unter Trainingsstationen sind Einrichtungen zu verstehen, welche dem Fahrschüler eine simulative Betätigung eines simulierten Schulfahrzeuges in einer simulierten Verkehrssituation ermöglichen.

Trainingsstationen weisen im allgemeinen mehr oder weniger realitätsgetreue Ausführungen von Fahrerkabinen eines Fahrzeuges oder ggfs. von Fahrersitzen von Motorrädern auf, die mit den üblichen, bei der Betätigung eines Motorfahrzeuges benötigten Betätigungsmitteln z.B. Gas, Kupplung, Bremse, Lenkrad, Richtungsblinker, Signalhorn, Beleuchtung, sowie ggfs. mit Anzeigegeräten, wie sie in einem Armaturenbrett angeordnet sind, jedoch zur Anzeige fiktiver Werte, ausgestattet sind. Zu einer Trainingsstation gehört im weiteren ein Szenariengenerator; darunter soll die Summe der Einrichtungen verstanden werden, die es erlauben, dem Fahrschüler eine zeitlich ablaufende, simulierte Verkehrssituation wahrnehmbar zu machen, in welcher er sein simuliertes Schulfahrzeug zu führen hat. Der Szenariengenerator umfasst im allgemeinen eine Projektionseinrichtung, mittels welcher man auf eine vor dem Fahrschüler angeordnete Fläche Bilder bzw. einen Film projiziert, um als stetig wechselnde Kulisse aufeinanderfolgende Verkehrssituation möglichst wirklichkeitsgetreu zu simulieren.

Einfachste Anlagen weisen keine Fahrerkabine sondern lediglich einen Sitz für den Fahrschüler sowie als Betätigungsmittel ein Lenkrad, ein Gaspedal, ein Bremspedal und ggfs. ein Kupplungspedal auf.

Die Anlagen sind im allgemeinen so konzipiert, dass sich der Fahrschüler nur reaktiv auf das Szenario verhalten kann, während er über die Betätigungsmittel höchstens Einfluss auf die Ablaufgeschwindigkeit der Verkehrssituationen aber im allgemeinen keinen weiteren Einfluss auf das Szenario nehmen kann. Seine Betätigung des Schulfahrzeuges löst also nur eine tempomässige aber keine weitere Reaktion im Szenario aus. Es liegt auf der Hand, dass auf diese Weise kein wirklichkeitsnaher Unterricht stattfinden kann.

Die **WO-93/24915** beschreibt eine Anlage, welche unter anderem zum Erlernen des Führens eines Fahrzeuges verwendet werden kann. Diese Anlage erlaubt es, dem Fahrschüler nicht nur ein Verkehrsszenario darzustellen, das er optisch wahrnehmen kann, sondem ihm auch akustische und mechanische Reize zu vermitteln, welche denjenigen entsprechen, die beim tatsächlichen Lenken eines Motorfahrzeuges von dessen Führer wahrgenommen werden. Beispielsweise lässt sich das Gefühl beim Bremsen mit ABS oder eine Erschütterung und ein Geräusch beim Überfahren eines Hindernisses simulieren. Bei diesem Feedback handelt es sich allerdings im allgemeinen nicht um eigentliche Rückmeldungen von Fahrfehlern sondern lediglich um eine verbesserte Simulation des Umfeldes des Fahrzeuges. Ausserdem lassen sich gewisse Grössen, wahrscheinlich Durchschnittsgeschwindigkeiten und ähnliches, die Anhaltspunkte über das allgemeine Fahrverhalten geben, zahlenmässig oder graphisch auf einem Monitor darstellen, wie dies bei neueren PKWs auch mit Hilfe eines Bordcomputers möglich ist. Eine konkrete Rückmeldung einzelner Fehler ist nicht vorgesehen.

Auch die **NL-9 100 838** beschreibt eine Anlage, die beispielsweise zum Erlernen der Beherrschung eines Motorfahrzeuges eingesetzt werden kann. Der Übungsstoff in Form verschiedener fiktiv abzufahrender Strecken wird blockweise vermittelt. In jedem Block werden die Fehler des Fahrschülers festgestellt, und je nach ihrer Anzahl und Schwere erfolgt anschliessend ein Fortschreiten der Übung zum nächsten Übungsstoff oder eine Wiederholung desselben Übungsstoffes oder ein Korrekturblock, in welchem auf die Fehler des Fahrschülers eingegangen wird. Eine sofortige Fehlerrückmeldung einzelner Fahrfehler an den Fahrschüler ohne Abbruch der Übung ist nicht vorgesehen.

Eine weitere Anlage dieser Art ist aus der **WO-91/11792** bekannt. Diese Anlage ist sehr polyvalent und kann zum Training verschiedenster Aktivitäten verwendet werden. Es geht dabei einerseits darum, jeweils optisch und anders möglichst realistische Umgebungsszenarien zu erzeugen und anderseits die vorgesehenen Aktivitäten durch einen Fachmann ausführen zu lassen und in der Folge eine entsprechende Software herzustellen, welche der optimalen Durchführung der Aktivität entspricht, offensichtlich um die letztere mit der realen Durchführung derselben Aktivität durch einen Nicht-Fachmann bzw. Fahrschüler zu vergleichen. Eine sofortige Rückmeldung von Fehlern ist nicht dargelegt.

Die **GB-2 099 964**-A betrifft einen Simulator zur Gefechtsausbildung von Schützen und Kommandanten von Panzerfahrzeugen. Die Auszubildenden befinden sich in einem kubischen Gehäuse, welches im wesentlichen dieselben Betätigungsmittel und Anzeigegeräte enthält wie die Panzerfahrzeuge. Das Szenario, welches das Panzerfahrzeug umgibt, wird den Auszubildenden auf einem Monitor dargestellt, welchen sie durch ein Periskop erblikken; ferner sind entsprechende Zielgeräte vorhanden. Da die Probleme, die sich bei der Gefechtsausbildung stellen, wo im allgemeinen keine Rücksicht auf weitere Verkehrsteilnehmer erforderlich ist, sich grundsätzlich von den Problemen unterscheiden, welche sich beim Führen eines Motorfahrzeuges ergeben, lassen sich aus der **GB-2 099 964** keine Lehren bezüglich Verbesserungen des eingangs genannten Verfahrens bzw. der eingangs genannten Anlage *-
ziehen.

In der Publikation ***Driving Simulation at Ford* erschienen in 'Automotive Enginering', Band 102, Nr. 9**, werden Fragen der Interaktion zwischen Fahrzeug, Fahrzeugführer und Fahrzeugumgebung behandelt. Das dabei zur Simulation der Fahrzeugumgebung verwendete Projektionssystem stellt bezüglich der Qualität des Bildes bezüglich Wirklichkeitsnähe einen Kompromiss dar zwischen den Erfordernissen der visuellen bzw. AugenAdaptation einerseits und der erforderlichen Helligkeit. Dieser Kompromiss stellt einen Nachteil dieses Simulators dar; hierzu wird auf die weiter oben dargelegte Wichtigkeit hingewiesen, die der richtigen Distanz des das Fahrzeug umgebenden Szenarios zukommt.

Schliesslich ist im Artikel ***Driving Simulation at General Motors* aus Automotive Engineering, Band 102, Nr. 9, Seiten 14 bis 19**, vom **01.September 1994**, der Einsatz von Fahrzeugsimulatoren zur Hilfe beim Entwurf von neuen Fahrerkabinen und ihren Ausrüstungen beschrieben. Mit Hilfe eines zu diesem Zweck hergestellten Simulators soll getestet werden, in welcher Weise sich Einzelheiten im Ausbau der Fahrerkabine auf das Verhalten eines Fahrzeugführers auswirken. Wichtig ist hier vor allem der modulartige Aufbau der Fahrerkabine, welcher es beispielsweise erlaubt, einzelne Teile auszutauschen bzw. zu verändern. Der wirklichkeitsgetreuen Simulation der Umgebung des Fahrzeuges, wie insbesondere der optisch korrekten Darstellung, wird wenig Bedeutung zugemessen. Daoffensichtlich die Erfordernisse hierbei andere sind als bei der Verwendung von Simulatoren im Unterricht lässt sich aus diesem Artikel kaum etwas zur Lösung der Probleme von Simulatoren zu Lehrzwecken ableiten.

Der wichtigste Nachteil der bekannten Anlagen ist darin zu sehen, dass die Handlungen des Fahrschülers, das heisst im wesentlichen seine Betätigung der Betätigungsmittel, zwar mit unterschiedlicher Genauigkeit festgestellt und die dabei erfolgenden Fehler auch ermittelt werden, dass sie aber dem Fahrschüler nicht unmittelbar und/oder nicht zwingend rückgemeldet werden; Rückmeldungen auf einem Monitor zum Beispiel müssen von einem Fahrschüler nicht zwingend zur Kenntnis genommen werden, es sei denn, ein Instruktor teile dem Fahrschüler gleichzeitig mit, dass der Monitor zu beachten ist oder lese die Angaben selbst ab zuhanden des Fahrschülers.

Jedenfalls werden ohne sofortige Fehlerrückmeldung zwei der wesentlichen Ziele der Fahrerausbildung in einer Simulationsanlage nicht erreicht, nämlich eine Beübung des Fahrschülers ohne die Anwesenheit eines Instruktors und eine merkliche Verbesserung des Verhaltens des Fahrschülers, welche nur dann stattfinden kann, wenn die Rückmeldung eines Fahrfehlers so schnell erfolgt, dass ihm die gesamten Umstände und sein Fahrverhalten noch erinnerlich sind und er sie mit dem Fahrfehler in Verbindung bringen kann.

Die Aufgabe der vorliegenden Erfindung wird somit darin gesehen, ein Verfahren und eine Anlage der eingangs genannten Art vorzuschlagen, welche es ermöglichen, einen wirklichkeitsnahen Unterricht in einer Trainingsstation zu erteilen, wobei die permanente Mithilfe eines Instruktors nicht notwendig ist.

Diese Aufgabe wird erfindungsgemäss durch die Merkmale der kennzeichnenden Teile der unabhängigen Patentansprüche **1** und **6** gelöst. Die abhängigen Patentansprüche **2** - **5** bzw. **7** - **21** definieren vorteilhafte Weiterbildungen des erfindungsgemässen Verfahrens bzw. der erfindungsgemässen Anlage.

Beim Training in der Anlage hält sich der Fahrschüler in einer Fahrerkabine eines simulierten Fahrzeuges (oder ggfs. auf einem Fahrersitz eines Motorrades) auf. Die Fahrerkabine (bzw. der Fahrersitz) sind vorzugsweise wirklichkeitsgetreue Nachbildungen von serienmässigen Produkten, ausgestattet mit den üblichen Betätigungsmitteln wie Lenkrad, Gas, Kupplung, Bremse sowie mit den üblichen Anzeigegeräten. Die Betätigungsmittel zur simulierten Fahrzeugbetätigung wie auch die Anzeigegeräte für die Anzeige fiktiver und ggfs. realer Werte sind vorzugsweise serienmässige Produkte und in gleicher Ausführung - also echt und nicht simuliert - vorhanden, wie in einem während einer späteren Unterrichtsphase verwendeten Schulfahrzeug; eine solche Massnahme erleichtert das Umsteigen aus der Trainingsstation in das Schulfahrzeug und ermöglicht es, den Unterricht abwechselnd in der Trainingsstation und im Schulfahrzeug abzuhalten. Im weiteren umfasst die Anlage einen Szenariengenerator, durch welchen dem Fahrschüler ein Szenario, also eine fiktive, sich verändernde Verkehrssituation, wahrnehmbar gemacht wird, in der er sich vermeintlich befindet. Erfindungsgemäss wird das Szenarion vor dem Unterricht erstellt. Die Anlage umfasst weitere Baugruppen, nämlich eine Detektoreinrichtung, eine Datenverarbeitungseinrichtung und eine Fehlermeldeeinrichtung; zusätzlich ist ein Kommunikationsnetzwerk vorhanden, welches die Baugruppen in der erforderlichen Weise verbindet. Die Rückmeldung der detektierten Fahrfehler erfolgt, welche sich aus der Abweichung zwischen der tatsächlich erfolgten simulativen und der optimalen Betätigung des Fahrzeuges ergibt, erfolgt erfindungsgemäss zeitlich unmittelbar nach dem Begehen des Fahrfehlers und vorzugsweise auch oder nur akustisch.

Mit Hilfe der Detektoreinrichtung wird die jeweilige simulative Betätigung jedes der Betätigungsmittel erfasst, und zwar - wo nötig - nicht nur qualitativ sondern auch quantitativ.

Je ein Eingang der Datenverarbeitungseinrichtung ist mit der Detektoreinrichtung und dem Szenariengenerator verbunden. Die Datenverarbeitungseinrichtung erhält von der Detektoreinrichtung die Betätigung der Betätigungsmittel repräsentierende Werte, welche aus den Handlungen des Fahrschülers resultieren und im allgemeinen mindestens teilweise fehlerbehaftet sind. Ausserdem erhält die Datenverarbeitungseinrichtung vom Szenariengenerator die entsprechenden Werte, die eine beim jeweiligen Szenario optimale bzw. fehlerlose Betätigung repräsentieren, und die einer perfekten Fahrzeugführung entsprechen. In einer Differenziereinheit der Datenverarbeitungseinrichtung wird die Abweichung der detektierten Betätigung ist von der optimalen Betätigung ermittelt. Diese Abweichung umfasst eine Vielzahl von Werten und stellt qualitativ und quantitativ die erfassten Fehler dar, die der Fahrschüler begeht.

Ein Ausgang der Datenverarbeitungseinrichtung ist mit einer Fehlermeldeeinrichtung verbunden, die sich im Wahrnehmungsbereich des Fahrschülers befindet. Durch diese Fehlermeldeeinrichtung erhält der Fahrschüler Rückmeldungen über die von ihm begangenen Fehler, und zwar im allgemeinen unmittelbar nachdem die Fehler unterlaufen sind, so dass er sie problemlos mit seinem Verhalten in Beziehung setzen kann.

Die Fehler des Fahrschülers werden also genau festgestellt und ihm sofort zur Kenntnis gebracht, und zwar, wie angestrebt, ohne das Beisein eines Instruktors. Damit fällt nicht nur die Notwendigkeit der Anwesenheit des Instruktors dahin, wobei man - als zusätzlichen Vorteil - eine objektive Fehlerermittlung mit einer Fehlermeldung erhält, die nicht von der Person und der Fähigkeit des Instruktors und vom Verhältnis zwischen dem Instruktor und dem Fahrschüler beeinflusst sind.

Damit der Fahrschüler sich auch bei gänzlicher Abwesenheit des Fahrlehrers üben kann, ist es vorteilhaft, wenn die Anlage so ausgebildet ist, dass er sie selbst aufstarten kann.

Wie weiter oben erwähnt, sind einfache Anlagen so konzipiert, dass der Fahrschüler nur reaktiv tätig sein kann oder ggfs. das Szenario nur tempomässig beeinflussen kann, was natürlich keinen wirklichkeitsnahen Unterricht erlaubt. Vorzugsweise wird nun die neue Anlage so gestaltet, dass eine Verbindung zwischen den Betätigungsmitteln und dem Szenariengenerator besteht, so dass sich das Szenario in Abhängigkeit von der Betätigung des Fahrzeuges durch den Fahrschüler verändert. Auf diese Weise kann ein Unterricht in Verhältnissen stattfinden, die der Wirklichkeit sehr nahekommen.

Im allgemeinen umfasst der Szenariengenerator Systeme zur Simulation von fahrzeugextern bestimmten Verhältnissen, Systeme zur Simulation von fahrzeugintern bestimmten Verhältnissen und Systeme zur Simulation von kombinierten, gleichzeitig fahrzeugintem wie auch fahrzeugextern bestimmten Verhältnissen; insgesamt können unter anderen die folgenden Verhältnisse simuliert werden: die allgemeine landschaftliche und/oder bauliche Umgebung, der Verlauf und Qualität der zu befahrenden Strecke auf einer Strasse oder im Gelände, der Blick auf die Haube des Fahrzeuges, so dies beim simulierten Fahrzeug möglich ist, Verkehrszeichen aller Art wie Tafeln, Ampeln und Verkehrslinien, motorisierte und andere, auch schienengebundene, ruhende und bewegte Verkehrsteilnehmer, welche sich regelkonform oder fehlerhaft verhalten und zeitlich oder situationsbedingt gesteuert werden können, tageszeitlich und witterungsmässig bestimmte Sichtverhältnisse, das Gewicht der Zuladung des simulierten Fahrzeuges, das Mass der Tankfüllung, das Vorhandensein eines Anhängers, dessen Achsenzahl und Gesamtgewicht sowie ggfs. Oeldruck, Reifendruck und Reifentyp, die mechanische Wirkung von Reifendruck, Fahrzeugfederung und Strassenqualität auf die Fahrerkabine, die Wirkung von Beschleunigung, Verzögerung, steigender und sinkender Fahrbahn, die Wirkung von nasser, beschneiter oder vereister Fahrbahn; Verkehrslärm, Fahrzeuglärm, Lärm von fiktiven Beifahrern oder Passagieren; zur Prüfung der Belastbarkeit der Fahrschüler ist es auch möglich, tatsächlich die Temperatur, insbesondere eine sehr hohe oder sehr tiefe Temperatur, zu wählen oder durch Zerstäuben von Essenzen Gerüche zu simulieren, obwohl zur Verhinderung von sogenannter 'Simulatorkrankheit' meist versucht wird, die Temperatur konstant zu halten und für genügend Frischluft zu sorgen.

Unter Berücksichtigung der eben erwähnten Einzelheiten der generierbaren Szenarien kann festgestellt werden, dass der Szenariengenerator mindestens ein System zur Simulierung einer optisch wahrnehmbaren Verkehrssituation umfasst, welche das primäre Element des Szenarios bildet.

Dem Fahrschüler kann aber eine naturgetreuere Verkehrssituation simuliert werden, wenn der Szenariengenerator ausserdem ein akustisches System zur Simulierung von Verkehrsgeräuschen aufweist, wobei es sich um Geräusche des das Fahrzeug umgebenden Verkehrs oder um durch das Fahrzeug und seine Benutzer selbst hervorgerufene Geräusche handeln kann.

Eine noch naturgetreuere Simulation der Verkehrssituation kommt zustande, wenn der Szenariengenerator ein mechanisches System zur Simulierung einer mechanisch wahrnehmbaren Verkehrssituation umfasst. Dabei kann es ich um Auswirkungen von simulierten Schieflagen des Fahrzeuges, simulierten schlechten Strassenbelägen sowie um Auswirkungen von Trägheitskräften handeln, die beim Beschleunigen, Verzögern sowie bei Kurvenfahrten des Fahrzeuges wirken. Das mechanische System kann so konzipiert sein, dass es auf den Fahrersitz oder auf die Fahrerkabine wirkt.

Um die Körperhaltung, die Bewegungen und ggfs. die Mimik des Fahrschülers zu erfassen, ist die Trainingsstation vorzugsweise mit einer Kamera ausgerüstet, die auf den Fahrschüler gerichtet ist. Die so erfassten Bilder können entweder aufgezeichnet und später vom Fahrschüler selbst betrachtet werden oder sie können - wie dies weiter unten beschrieben wird - ggfs. mittels eines Monitors sofort visualisiert und von einer Drittperson betrachtet werden.

Die Fehlermeldeeinrichtung, mittels welcher dem Fahrschüler die von ihm begangenen Fehler rückgemeldet werden, kann einen Lautsprecher, im allgemeinen in der Fahrerkabine, oder einen Kopfhörer enthalten, über welchen die Fehlermeldung akustisch erfolgt.

Eine einfache Möglichkeit der Fehlermeldung besteht darin, den Fahrschüler mittels eines Signaltons auf die Tatsache hinzuweisen, dass er einen Fehler begangen hat; dabei können durch die Tonhöhe und die Lautstärke die Art und Schwere des Fehlers differenziert angegeben werden. Didaktisch besser ist es aber, die Fehlermeldung vokal vorzunehmen, etwa in der Art und Wortwahl, wie Fehlerkritiken sonst von Instruktoren ausgeprochen werden. Anstelle einer akustischen Fehlermeldevorrichtung oder zusätzlich zu einer solchen kann auch eine optische Fehlermeldevorrichtung vorgesehen sein. Eine solche kann entweder nur ein Signal, statisch oder blinkend, ggfs. in verschiedenen Farben und Intensitäten, oder eine genauere Angabe auf einem vom Fahrschüler wahrnehmbaren Monitor sein.

Um Anfängern einen unbeschwerten Einstieg zu verschaffen, und um allen Fahrschülern die Konzentration auf das richtige Fahrverhalten zu erleichtern, ist es empfehlenswert, wenn die Fehlermeldeeinrichtung generell ausschaltbar und jeweils nur auf Wunsch des Fahrschülers temporär einschaltbar ist. Dies ist besonders empfehlenswert bei optischen Fehlermeldeeinrichtungen, die die Gefahr mit sich bringen, den Blick des Fahrschülers vom Verkehrsgeschehen abzulenken.

Im Hinblick auf die Förderung des Trainings ohne Instruktor wie auch zur Gewinnung eines Überblicks auf das Lernverhalten des Fahrschülers hat es sich als günstig erwiesen, die Datenverarbeitungseinrichtung mit einer Speichereinheit zu versehen, um die Abweichungen von der optimalen Betätigung, d.h. also die Fehler, die dem Fahrschüler während einer bestimmten Zeit unterlaufen, zu speichern. Die gespeicherten Fehler können dann anschliessend an das Training vom Fahrschüler selbst, mit oder ohne einen Instruktor, oder auch vom Instruktor allein, visualisiert werden.

Noch besser, aber auch aufwendiger ist es, wenn eine Druckvorrichtung vorhanden ist, um die gespeicherten Fehler in einem Fehlerprotokoll auszudrucken. Ein solches Fehlerprotokoll kann fortlaufend oder im Anschluss an eine Lektion in wörtlicher und/oder bildlichschematischer Darstellung erzeugt werden und anschliessend an die Lektion vom Fahrschüler eingesehen werden.

Obwohl es das Ziel der Erfindung ist, den Zeitaufwand des Instruktors zu minimalisieren und den Fahrunterricht bzw. das Training in der Trainingsstation ohne einen Instruktor ablaufen zu lassen, ist es dennoch wünschenswert, dass mindestens zeitweise ein Instruktor vorhanden ist. Zu diesem Zwecke kann die Anlage zusätzlich zur Trainingsstation für den Fahrschüler eine Instruktorenstation für einen Instruktor bzw. Fahrlehrer umfassen, welche über das schon erwähnte Kommunikationsnetzwerk mit der Trainingsstation verbunden ist. Es sei aber darauf hingewiesen, dass auch bei einer derart erweiterten Anlage, die eine Instruktorenstation umfasst, das Training in der Trainingsstation stattfinden kann, ohne dass die Instruktorenstation bemannt oder auch nur aufgestartet werden muss.

Um den Unterricht möglichst so zu gestalten, wie er später im Schulfahrzeug fortgesetzt wird, ist es günstig, wenn die Trainingsstation und die Instruktorenstation über eine aus/einschaltbare Gegensprechanlage miteinander verbunden sind, so dass der Fahrschüler und der Instruktor in üblicher Weise kommunizieren können.

Die Instruktorenstation ist im allgemeinen mit einer Anzeigevorrichtung ausgerüstet, mittels welcher die Art der Betätigung der Betätigungsmittel durch den Fahrschüler sowie dessen Fehler visualisiert werden können.

Einige der schon erwähnten Geräte, beispielsweise die Druckeinrichtung zur Erstellung des Fehlerprotokolls, der Monitor zur Visualisierung der von der Kamera aufgenommenen Bilder und der entsprechende Rekorder werden in einer Anlage mit einer Instruktorenstation vorzugsweise in der Instruktorenstation angeordnet. Dadurch ermöglicht man dem Instruktor die grösstmögliche Übersicht über das Lernverhalten des Fahrschülers und entzieht gleichzeitig sämtliche einen Fahrschüler betreffende Daten dem Zugriff weiterer Fahrschüler, die dieselbe Trainingsstation benützen. Dessenungeachtet besteht die Möglichkeit, dass jeder Fahrschüler auch bei Abwesenheit des Instruktors in der Instruktorenstation sein Fehlerprotokoll erhalten kann.

Ein Nachteil früherer Anlagen war es, dass für den Unterricht nur eine bestimmte Anzahl nicht veränderbarer Szenarien zur Verfügung standen. Da die erstmalige Erzeugung eines Szenarios, das dann vom Szenariengenerator dem Fahrschüler wahrnehmbar gemacht wird, verhältnismässig aufwendig ist, wurde meist eine sehr beschränkte Anzahl von Szenarien verwendet. Dies hatte zur Folge, dass der Fahrschüler in kurzer Zeit die Szenarien kannte und gewissermassen routinemässig erledigte, wobei der Lerneffekt entsprechend gering war. Vorzugsweise ist daher der Szenariengenerator mit der Instruktorenstation verbunden, um dem Instruktor zu erlauben, Grundszenarien aufgrund von in einer Datenbank gespeicherten Daten zu erzeugen und diese Grundszenarien mittels Szenarienzusätzen zu verändern, beispielsweise durch Veränderung der Strassenbreite, Einfügung zusätzlicher Verkehrszeichen, Veränderung der Sicht- und Meteorologieverhältnisse, Änderung des Fahrzeuggewichtes, Beifügen eines Anhängers und ähnliches. Dadurch lässt sich aus einer beschränkten Anzahl von Grundszenarien eine Vielzahl von Szenarien erstellen, bei deren Verwendung dem Fahrschüler immer neue Verkehrssituationen simuliert werden.

Wenn auch die Veränderung von Szenarien durch den Instruktor eine quantitative Verbesserung beinhaltet, so beinhaltet sie doch kein grundsätzlich neuartiges Element eines Szenarios. Eine solche grundsätzliche Erweiterung der Möglichkeiten erhält man, wenn die Instruktorenstation dem Instruktor gestattet, das Szenario während des Unterrichts, beispielsweise durch Simulierung eines Fahrzeugdefektes, zu verändern, welcher sich durch das simulierte Verhalten des Fahrzeuges und/oder durch Veränderung von auf Anzeigegeräten angezeigten Werten manifestieren kann. Ein solcher Fahrzeugdefekt und die darauf notwendige Reaktion oder auch nur die Möglichkeit des Eintretens eines Defektes kann einem Anfänger durch den Instruktor erklärt werden, während das Simulieren eines Fahrzeugdefektes bei einem fortgeschrittenen Fahrschüler vorzugsweise ohne Vorwarnung erfolgt.

In Anbetracht dessen, dass der Fahrschüler nur einen Teil der Aufmerksamkeit und Zeit des Instruktors benötigt, ist es besonders vorteilhaft, wenn die erfindungsgemässe Anlage mit einer Trainingsstation neben der Instruktorenstation eine oder mehrere weitere Trainingsstationen umfasst, die im wesentlichen gleich ausgebildet und mit der Instruktorenstation verbunden sind wie die erstgenannte Trainingsstation. Für einen Unterricht, der den Instruktor auslastet aber nicht überfordert, sind drei bis sechs Trainingsstationen eine günstige Zahl.

Bei einer Anlage mit mehreren Trainingsstationen ist es besonders rationell, den Monitor, den Rekorder und den Drucker in der Instruktorenstation anzuordnen, und die Verbindungen zwischen der Instruktorenstation und den Trainingsstationen so auszulegen, dass sich der Instruktor wahlweise jeweils mit einer der Trainingsstationen verbinden kann.

Zu didaktischen Zwecken oder zur Simulation von Verkehrsfunk ist es günstig, wenn sich der Instruktor über die Gegensprechanlage auch gleichzeitig an alle Fahrschüler wenden kann.

Die Instruktorenstation kann im weiteren so ausgebildet sein, dass mit ihrer Hilfe administrative Aufgaben, wie die Festlegung eines Lektionenplanes aufgrund von Lernfortschritten, durchgeführt werden.

Weitere Einzelheiten der Erfindung werden im folgenden anhand eines Ausführungsbeispiels und mit Bezug auf die Zeichnung ausführlich beschrieben. Es zeigt:
- **Fig. 1**: Eine Anlage nach der Erfindung, mit einer Trainingsstation, in einem Schaubild von schräg vorne/rechts/oben;
- **Fig. 2**: eine Anlage nach der Erfindung, mit einer Trainingsstation, in einem Schaubild von schräg hinten/rechts;
- **Fig. 3**: eine Anlage nach der Erfindung mit fünf Trainingsstationen und einer Instruktorenstation in einem Unterrichtslokal, in einem vereinfachten Schaubild;
- **Fig. 4**: eine Anlage nach der Erfindung mit einer Trainingsstation, einer Instruktorenstation und dem sie verbindenden Kommunikationsnetzwerk, in stark vereinfachter, schematischer Darstellung; und
- **Fig. 5**: eine Instruktorenstation, in einem Schaubild, wie sie sich einem Instruktor präsentiert.

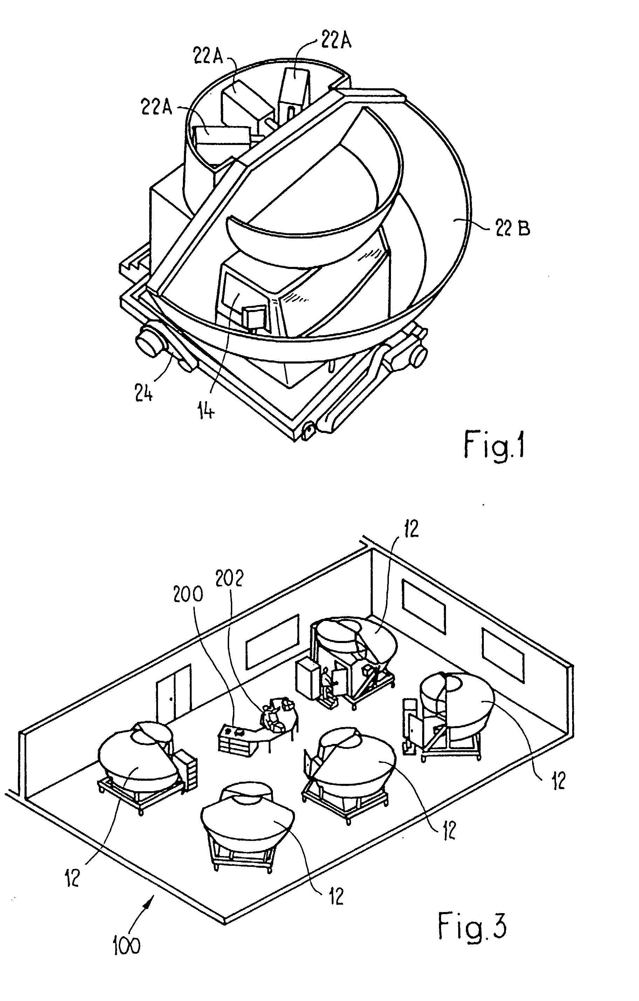

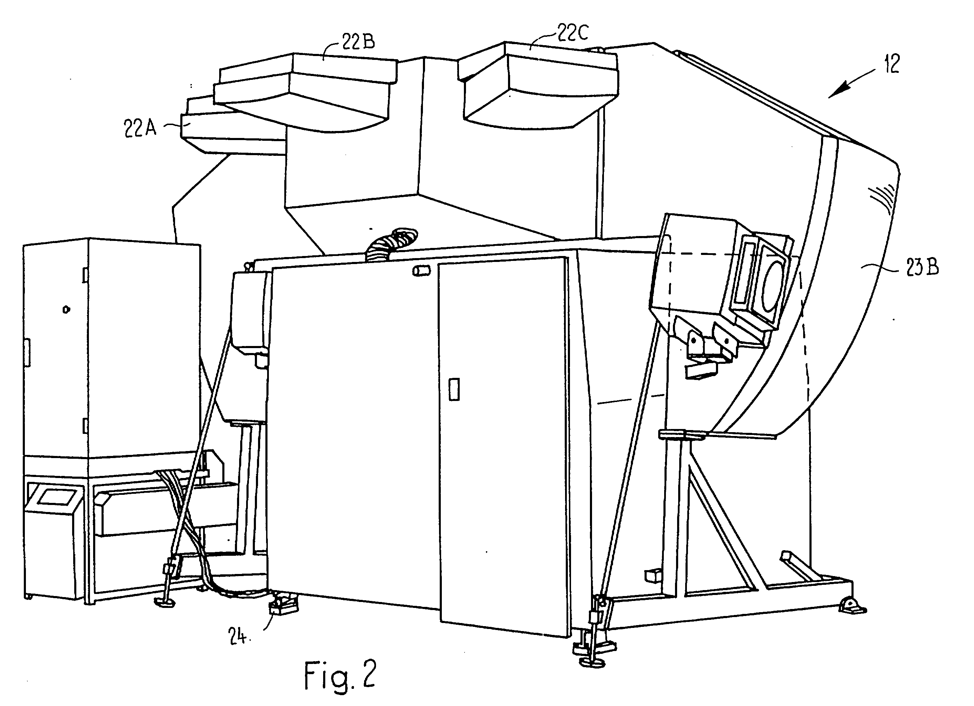

Die in **Fig. 1** und **Fig. 2** dargestellten Anlagen umfassen jeweils eine einzige Trainingsstation **12** mit einer Fahrerkabine **14** und einem Szenariengenerator. Eine solche Trainingsstation **12** ist in allen Einzelheiten in der gleichzeitig eingereichten Patentanmeldung Nr. **CH 1996 2262/96** derselben Anmelderin beschrieben.

Die Fahrerkabine **14** ist eine wirklichkeitsnahe Nachbildung einer echten Fahrerkabine, und es ist natürlich sinnvoll, als Fahrerkabine **14** der Trainingsstation **12** eine Fahrerkabine zu wählen, die gleich ist wie diejenige des im Laufe des Unterrichts später auch benutzten Schulfahrzeuges. Bei den abgebildeten Fahrerkabinen **14** handelt es sich um Fahrerkabinen von Nutzfahrzeugen, d.h. von Lastkraftwagen; diese wurden als Beispiele gewählt, weil sich die für den Unterricht vorteilhaften Eigenschaften der Erfindung beim Führen von schweren Motorwagen besonders stark auswirken. Die Erfindung ist aber nicht auf Lastkraftwagen beschränkt sondern lässt sich für den Fahrunterricht auf beliebigen simulierten motorisierten Strassen- und Geländefahrzeugen für private, gewerbliche und militärische Zwecke mit zwei und mehr Rädern, Raupen oder Ketten verwenden.

Der Szenariengenerator umfasst ein System **22** zur Simulation einer optisch wahrnehmbaren Verkehrssituation; von diesem sind drei Projektoren **22A** sowie eine Wiedergabefläche **23B** dargestellt. Mittels des Systems **22** lässt sich das primäre Element der Verkehrssituation darstellen, im wesentlichen die Strasse bzw. das Gelände, die Umgebung und weitere Verkehrsteilnehmer, sämtliche Verkehrszeichen, der Blick auf die Haube des eigenen Fahrzeuges sowie Sicht- und teilweise Witterungsverhältnisse.

Im weiteren umfasst der Szenariengenerator ein System **24** zur Simulation der mechanisch wahrnehmbaren Verkehrssituation, das heisst zum Beispiel der Erschütterungen und Trägheitskräfte, die auf den Fahrschüler wirken können; dieses System **24** ist als bewegliche Lagerung der Fahrerkabine **14** dargestellt. Damit lässt sich simulieren, wie beispielsweise beim simulierten Befahren einer schlechten und/oder geneigten Strasse das simulierte Fahrzeug und der Fahrschüler Erschütterungen ausgesetzt sind. Die Wirkungen von geneigten Strassen, Beschleunigungen, Verzögerungen und Kurvenfahrten auf den Fahrers lassen sich mittels nicht dargestellter Teile des Systems **24** ebenfalls simulieren. Anstelle der Fahrerkabine kann auch zum gleichen Zweck lediglich der Fahrersitz verstellbar gelagert sein.

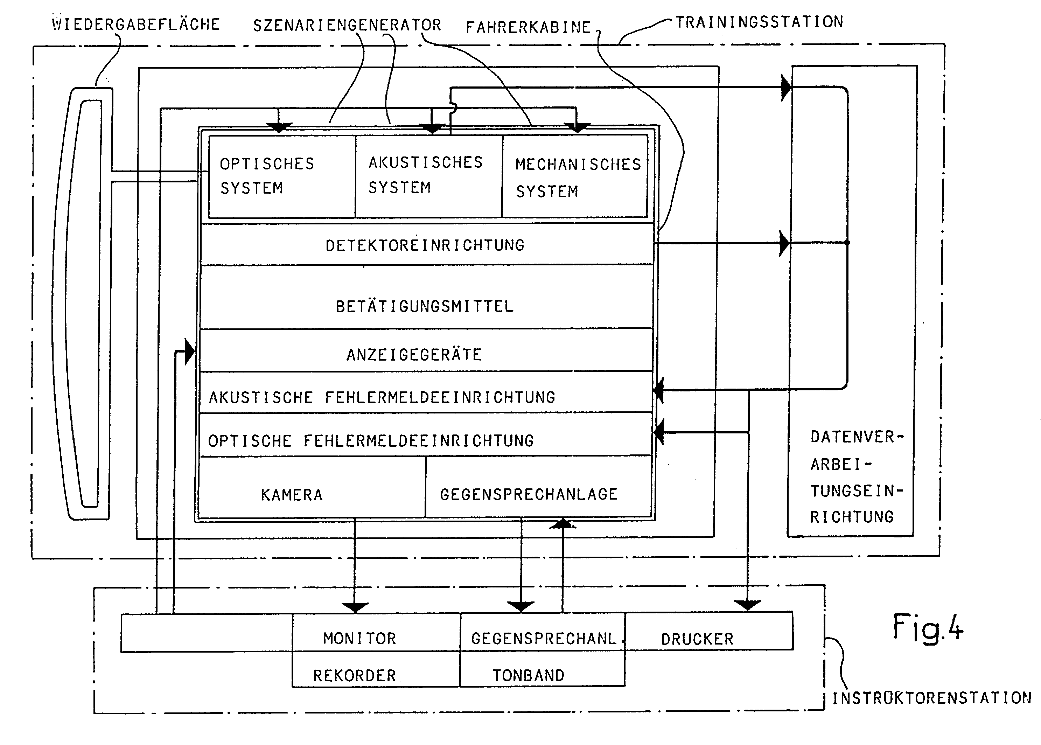

In **Fig. 3** ist eine Anlage **100** nach der Erfindung dargestellt, welche sich in einem Unterrichtslokal befindet und fünf Trainingsstationen **12** sowie eine Instruktorenstation **200** mit einem sie bemannenden Instruktor **202** umfasst. Die Trainingsstationen **12** können mit gleichen oder unterschiedlichen Fahrerkabinen bestückt sein, und sie sind auch einzeln verwendbar, ob nun die Instruktorenstation **200** bemannt und eingeschaltet ist oder nicht.

**Fig. 4** zeigt als Schema die Trainingsstation mit den in der Fahrerkabine angeordneten Betätigungsmitteln und Anzeigegeräten. Die Betätigungsmittel umfassen Gas-, Bremsund Kupplungspedal, Lenkrad, Blinkerhebel sowie weitere Schalter, die in einer üblichen Fahrerkabine vorhanden sind und bei Bedarf vom Fahrschüler betätigt werden müssen; auch die Anzeigegeräte entsprechen den üblicherweise vorhandenen Anzeigegeräten, beispielsweise für Tachometer, Temperaturen, Tankfüllung und ähnliche Grössen, welche während einer Fahrt dauernd oder gelegentlich vom Fahrschüler beobachtet werden müssen.

Weitere Bestandteile der Trainingsstation sind gemäss **Fig. 4** eine Detektoreinrichtung eine Datenverarbeitungseinrichtung, eine akustische und eine optische Fehlermeldeeinrichtung sowie ein die verschiedenen genannten Baugruppen der Trainingsstation in erforderlicher Weise verbindendes Kommunikationsnetzwerk.

Die Detektoreinrichtung weist Sensoren auf, welche den verschiedenen Betätigungsmitteln zugeordnet sind; auf diese Sensoren wirken sich die jeweiligen Aktionen des Fahrschülers auf die einzelnen Betätigungsmittel aus. Insgesamt erfasst also die Detektoreinrichtung die Betätigung des simulierten Fahrzeuges durch den Fahrschüler und damit gewissermassen sein Verhalten in der stetig wechselnden, durch den Szenariengenerator erzeugten fiktiven Verkehrssituation. Im weiteren weist die Detektoreinrichtung eine auf den Fahrschüler gerichtete Kamera auf.

Die Detektoreinrichtung ist über einen Kanal des Kommunikationsnetzwerkes mit einem Eingang der Datenverarbeitungseinrichtung verbunden, um dieser Daten über die Betätigung des simulierten Fahrzeuges zu liefern.

Auch der Szenariengenerator ist über einen Kanal des Kommunikationsnetzwerkes mit einem weiteren Eingang der Datenverarbeitungseinrichtung verbunden, um dieser Daten über das jeweilige Szenario und die dabei - nicht von Fahrschüler ausgeführte sondern vorbestimmte, fiktive - optimale Betätigung zu liefern.

Die Datenverarbeitungseinrichtung besitzt eine Differenziereinheit, welche die Abweichung der durch den Fahrschüler verursachten und durch die Detektoreinrichtung erfassten Betätigung von der dem herrschenden Szenario entsprechenden optimalen Betätigung ermittelt. Diese Abweichung, d.h. der Unterschied zwischen der vom Fahrschüler vorgenommenen Betätigung und der optimalen Betätigung, entspricht dem Fehler bzw. den Fehlern, welche vom Fahrschüler begangen werden.

Ein Ausgang der Datenverarbeitungseinrichtung ist über einen Fehlermeldekanal des Kommunikationsnetzwerkes mit einer Fehlermeldeeinrichtung im Wahrnehmungsbereich des Fahrschülers verbunden. Die Fehlermeldeeinrichtung umfasst beim vorliegenden Ausführungsbeispiel eine optische Fehlermeldeeinrichtung in Form eines Lautsprechers, der im übrigen auch Teil einer Gegensprechanlage ist. Die Fehlermeldung erfolgt also akustisch, und zwar vokal; der Fahrschüler wird also von einer Stimme auf seine Fehler aufmerksam gemacht. Wie weiter oben beschrieben, erfolgt die Fehlermeldung auch in optischer Weise, wobei der Fahrschüler auf Wunsch einen Monitor einschalten kann. Prinzipiell kann eine optische Fehlermeldeeinrichtung auch anstelle der akustischen Fehlermeldeeinrichtung vorgesehen sein. Die Fehlermeldeeinrichtung oder ein Teil derselben, zum Beispiel der akustische oder der optische Teil, kann ausgeschaltet werden, und zwar entweder vollständig oder so, dass sie auf Wunsch des Fahrschülers wieder einschaltbar ist.

Die Detektoreinrichtung ist im weiteren über eine Steuerleitung des Kommunikationsnetzwerkes und über die Datenverarbeitungseinrichtung mit dem Szenariengenerator verbunden. Auf diese Weise wird der Ablauf der Szenarien in Reaktion auf die durch den Fahrschüler erfolgte Betätigung des simulierten Schulfahrzeuges gesteuert.

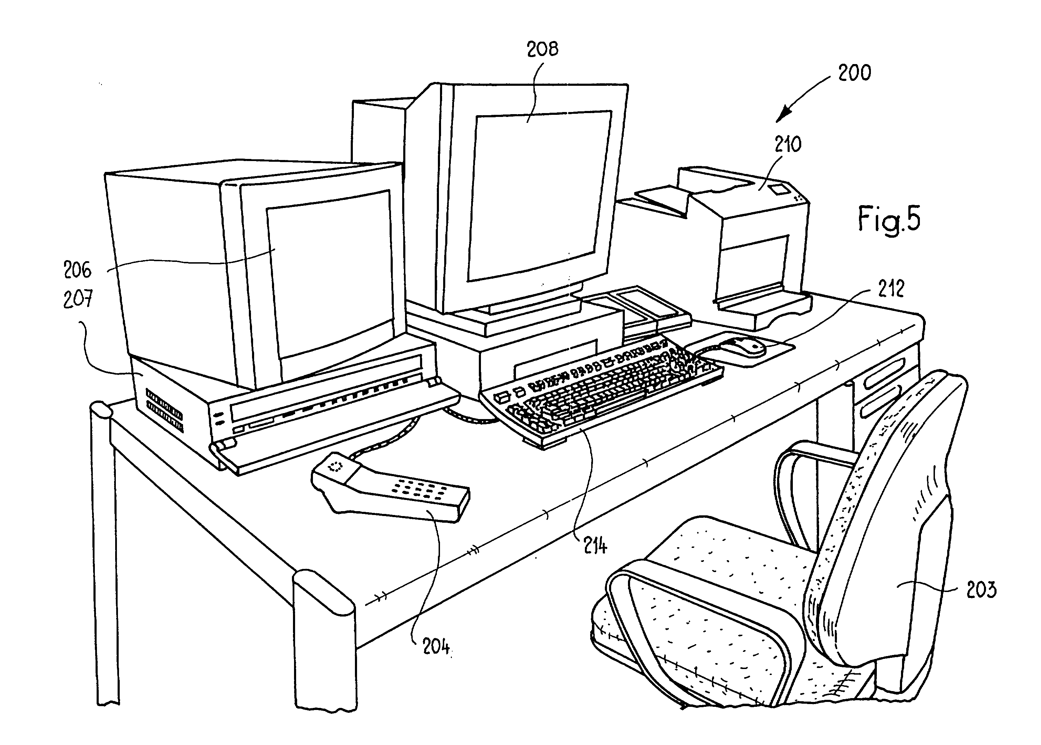

Die in **Fig. 5** dargestellte Instruktorenstation **200** ist über entsprechende Kanäle des Kommunikationsnetzwerkes mehrfach mit jeder der Trainingsstationen **12** verbunden. Dazu gehört eine monodirektional und bidirektional benützbare Sprechverbindung **204**, über welche sich der Instruktor, für welchen ein Sessel **203** vorgesehen ist, wahlweise an einen oder mehrere Fahrschüler wenden kann und welche auch die mündliche Kommunikation zwischen dem Instruktor einerseits und jedem einzelnen der Fahrschüler anderseits ermöglicht, und zwar sowohl auf Wunsch der Fahrschüler oder auf Wunsch des Instruktors. Ferner ist die in jeder Trainingsstation vorhandene Kamera mit einem Monitor **206** der Instruktorenstation **200** verbunden, derart, dass der Instruktor wahlweise einen der Fahrschüler beobachten kann; auch ein Rekorder **207** zur Aufnahme dieser Bilder ist vorgesehen. Schliesslich besteht eine Verbindung vom Ausgang der Datenverarbeitungseinrichtung zur Instruktorenstation **200** und eine Visualisierungseinrichtung **208** sowie Druckeinrichtung **210** in der Instruktorenstation **200**, um dem Instruktor die laufende oder spätere Beobachtung der Fehler der Fahrschüler zu ermöglichen. Die Aufzeichnung der letztgenannten Informationen, welche in Speichereinheiten jeder der Datenverarbeitungseinrichtungen der Trainingsstationen oder in einer zentralen Speichereinheit gespeichert sind, können entweder vom Instruktor oder von den Fahrschülern selbst ausgedruckt werden, wozu die Anwesenheit des Instruktors nicht notwendig ist. Bei den bisher genannten Speichereinheiten handelt es sich um Speichereinheiten, welche für beschränkte Einsätze konzipiert sind, z.B. die Speicherung des Fahrverhaltens während einer bestimmten, begrenzten Zeit.

Die Instruktorenstation **200** verfügt im weiteren über Mittel, die es dem Instruktor gestatten, den Szenariengenerator ausschliesslich zu Demonstrationszwecken zu benutzen, dies entweder als Einführung der Fahrschüler bevor sie sich selbst üben oder später zur Demonstration des korrekten Verhaltens bzw. zur Demonstration der Folgen inkorrekten Verhaltens.

Die Instruktorenstation enthält ausserdem eine mit dem Szenariengenerator verbundene Datenbank mit Daten, welche es dem Instruktor erlauben, Grundszenarien zu erstellen und diese mit Szenarienzusätzen, das heisst mit Einzelheiten für Szenarien, zu verändern, wobei aus einem Grundszenario eine Vielzahl von Szenarien herstellbar ist.

Schliesslich verfügt die Instruktorenstation **200** über Mittel zur Steuerung des gesamten Unterrichtsprogrammes, welche eine Maus **212** und Tastatur **214** umfassen.

Eine genauere Beschreibung der einzelnen Baugruppen erübrigt sich, da es sich dabei um jedem Fachmann bekannte konstruktive Elemente handelt, die in der erforderlichen Weise zusammengebaut werden. Es liegt auf der Hand, dass dies in Einzelheiten in sehr verschiedener Weise vorgenommen werden kann.

## Patentansprüche

1. Verfahren zur Erfassung des Verhaltens eines Fahrschülers in einem simulierten Schulfahrzeug, wobei der Fahrschüler in einer Fahrerkabine das Schulfahrzeug simulativ betätigt, während ein vom Fahrschüler wahmehmbares, zeitlich wechselndes, eine Verkehrssituation simulierendes Szenario erzeugt wird, wobei die simulative Betätigung erfasst und die Abweichung der simulativen Betätigung von einer dem Szenario entsprechenden, vorbestimmten und gespeicherten optimalen Betätigung ermittelt wird,
**dadurch gekennzeichnet**,
- dass das Szenario vor dem Unterricht erstellt wird, und
- dass die Abweichung der simulativen von der optimalen Betätigung dem Fahrschüler als Fehlermeldung unmittelbar nach dem Begehen des Fehlers übermittelt wird.

2. Verfahren nach Anspruch **1**,
**dadurch gekennzeichnet**,
dass ein Instruktor mit dem Fahrschüler verbunden ist, um Informationen über das Szenario, den Fahrschüler und ggfs. dessen Betätigung des Schulfahrzeuges und/oder die Fehlerrückmeldungen zu empfangen.

3. Verfahren nach Anspruch **1**,
**dadurch gekennzeichnet**,
dass das Szenario mindestens teilweise von einem Instruktor erstellt wird.

4. Verfahren nach einem der vorangehenden Ansprüche,
**dadurch gekennzeichnet**,
dass der Instruktor das Szenario während dem Unterricht verändert.

5. Verfahren nach einem der vorangehenden Ansprüche,
**dadurch gekennzeichnet**,
dass der Instruktor mit mindestens einem weiteren Fahrschüler in im wesentlichen gleicher Weise wie mit dem erstgenannten Fahrschüler verbunden ist.

6. Anlage zur Erfassung des Verhaltens eines Fahrschülers in einem simulierten Schulfahrzeug, mit einer Trainingsstation für den Fahrschüler, welche eine Fahrerkabine mit Betätigungsmitteln zur simulierten Betätigung des Schulfahrzeuges und einen Szenariengenerator zur Simulierung einer vom Fahrschüler wahrnehmbaren, zeitlich wechselnden Verkehrssituation umfasst, wobei dass die Trainingsstation (**12**) eine Detektoreinrichtung zur Erfassung der jeweiligen simulierten Betätigung besitzt, und die Detektoreinrichtung und der Szenariengenerator über ein Kommunikationsnetzwerk mit einer Datenverarbeitungseinrichtung der Trainingsstation (**12**) verbunden sind, um die Datenverarbeitungseinrichtung mit ersten, von Detektoreinrichtung gelieferten und die detektierte Betätigung repräsentierenden Informationen und mit zweiten, vom Szenariengenerator gelieferten und die jeweils vorbekannte optimale Betätigung repräsentierenden Informationen zu beliefern, wobei die Datenverarbeitungseinrichtung eine Differenziereinheit zur Ermittlung der Abweichung der ersten von den zweiten Informationen besitzt,
**dadurch gekennzeichnet**,
- dass die Trainingsstation durch den Fahrschüler aktivierbar ist,
- dass das Kommunikationsnetzwerk die Datenverarbeitungseinrichtung mit einer Fehlermeldeeinrichtung im Wahrnehmungsbereich des Fahrschülers verbindet, um dem Fahrschüler die ermittelte Abweichung unmittelbar nach der Entstehung des Fehlers als Fehlerrückmeldung zu übermitteln, und
- dass die Datenverarbeitungseinrichtung eine Speichereinheit zur Speicherung der Abweichung enthält.

7. Anlage nach Anspruch **6**,
**dadurch gekennzeichnet**,
dass der Szenariengenerator mit den Betätigungsmitteln verbunden und mindestens teilweise durch deren Betätigung steuerbar ist.

8. Anlage nach einem der Ansprüche **6 - 7**,
**dadurch gekennzeichnet**,
dass der Szenariengenerator ein Projektionssystem (22A, 22B)zur Simulierung einer optisch wahrnehmbaren Verkehrssituation umfasst.

9. Anlage nach einem der Ansprüche **6 - 8**,
**dadurch gekennzeichnet**,
dass der Szenariengenerator ein akustisches System zur Simulierung einer akustisch wahrnehmbaren Verkehrssituation umfasst.

10. Anlage nach einem der Ansprüche **6 - 9**,
**dadurch gekennzeichnet**,
dass der Szenariengenerator ein mechanisches System (24) zur Simulierung einer mechanisch wahrnehmbaren Verkehrssituation umfasst.

11. Anlage nach einem der Ansprüche **6- 10**,
**dadurch gekennzeichnet**,
dass die Detektoreinrichtung eine auf den Fahrschüler gerichtete Kamera sowie einen Monitor zur Visualisierung und/oder einen Rekorder zur Aufnahme der von der Kamera aufgenommenen Bilder enthält.

12. Anlage nach einem der Ansprüche **6 - 11**,
**dadurch gekennzeichnet**,
dass die Fehlermeldeeinrichtung als Lautsprecher zur Abgabe einer akustischen, vorzugsweise vokalen, Fehlermeldung und/oder als Display zur Abgabe einer optischen Fehlermeldung angeschlossen ist.

13. Anlage nach einem der Ansprüche **6 - 12**,
**dadurch gekennzeichnet**,
dass die Fehlermeldeeinrichtung ganz oder teilweise ausschaltbar und durch den Fahrschüler oder einen Instruktor temporär ganz oder teilweise einschaltbar ist.

14. Anlage nach einem der Ansprüche **6 - 13**,
**dadurch gekennzeichnet**,
dass die Datenverarbeitungseinrichtung über das Kommunikationsnetzwerk mit einem Drucker (**210**) verbunden ist, um eine schriftliche, zahlenmässige und/oder bildliche Darstellung der Abweichungen zu drucken.

15. Anlage nach einem der Ansprüche **6-14**,
**dadurch gekennzeichnet**,
sie eine Instruktorenstation (**200**) umfasst, welche mit der Trainingsstation (**12**) über das Kommunikationsnetz verbunden ist.

16. Anlage nach einem der Ansprüche **6 - 15**,
**dadurch gekennzeichnet**,
dass die Verbindung der Instruktorenstation (**200**) mit der Trainingsstation (**12**) eine Gegensprechanlage (**204**) enthält.

17. Anlage nach einem der Ansprüche **6 - 16**,
**dadurch gekennzeichnet**,
dass die Instruktorenstation (**200**) eine Anzeigevorrichtung (**208**) für die Betätigung der Betätigungsmittel und/oder die Fehlerrückmeldungen umfasst.

18. Anlage nach einem der Ansprüche **6 - 17**,
**dadurch gekennzeichnet**,
dass der Drucker (**210**) und/oder der Monitor (**206**) bzw. der Rekorder (**207**)in der Instruktorenstation (**200**) angeordnet sind.

19. Anlage nach einem der Ansprüche **6 - 18**,
**dadurch gekennzeichnet**,
dass die Instruktorenstation (**200**) mit dem Szenariengeber verbunden ist, um Szenarien zu erzeugen und/oder zu verändern.

20. Anlage nach einem der Ansprüche **6 - 19**, **dadurch gekennzeichnet**,
dass die Instruktorenstation (**200**) mit dem Szenariengeber verbunden ist, um, insbesondere auf Anzeigegeräten vom Fahrschüler wahmehmbare, Fahrzeugdefekte zu simulieren.

21. Anlage (**100**) nach einem der Ansprüche **6 - 20**,
**dadurch gekennzeichnet**,
dass sie mindestens eine weitere Trainingsstation (**12**) umfasst, welche im wesentlichen wie die erstgenannte Trainingsstation (**12**) ausgebildet und mit der Instruktorenstation (**200**) verbunden ist.

## Claims

1. Method for logging the behaviour of a learner driver in a simulated training vehicle, where the learner driver simulatively operates the training vehicle from a driver's cab whilst a scenario that simulates a traffic situation is generated which can be perceived by the learner driver and which changes with time, the simulative vehicle handling being recorded and the manner in which the simulative vehicle handling deviates from a predetermined and stored optimum vehicle handling appropriate to the scenario being ascertained,
characterised in that
- the scenario is prepared before the lesson, and
- the deviation of the simulative vehicle handling from the optimal handling thereof is communicated to the learner driver as an error message immediately after the error has been made.

2. Method according to claim 1,
characterised in that an instructor is linked up to the learner driver in order to receive information about the scenario, the learner driver and, if appropriate, his/her handling of the training vehicle and/or the error acknowledgements.

3. Method according to claim 1,
characterised in that the scenario is at least in part prepared by an instructor.

4. Method according to any one of the preceding claims, characterised in that the instructor varies the scenario during the lesson.

5. Method according to any one of the preceding claims. characterised in that the instructor is linked up to at least one additional learner driver in essentially the same manner as to the first learner driver.

6. Installation for logging the behaviour of a learner driver in a simulated training vehicle, having a training station for the learner driver, comprising a driver's cab with operating means for simulated handling of the training vehicle and a scenario generator for simulating a traffic situation which can be observed by the learner driver and which changes with time, the training station (12) having a detector device for logging the respective simulated handling, and the detector device and the scenario generator being connected via a communications network to a data processing device belonging to the training station (12) in order to supply the data processing device with first information supplied by the detector device and representing the detected handling and with second information supplied by the scenario generator and representing the optimal handling respectively already known, the data processing device having a differentiating unit for ascertaining the deviation of the first information from the second,
characterised in that
- the training station is adapted to be activated by the learner driver,
- the communications network connects the data processing device to an error message device within the learner driver's range of perception, in order to communicate the ascertained deviation as an error acknowledgement to the learner driver immediately after the error has occurred, and
- the data processing device contains a memory unit for storing the deviation.

7. Installation according to claim 6,
characterised in that the scenario generator is connected to the operating means and is adapted to be controlled at least in part by the actuation thereof.

8. Installation according to either of claims 6 to 7, characterised in that the scenario generator includes a projection system (22A, 22B) for simulating an optically perceptible traffic situation.

9. Installation according to any one of claims 6 to 8, characterised in that the scenario generator includes an acoustic system for simulating an acoustically perceptible traffic situation.

10. Installation according to any one of claims 6 to 9, characterised in that the scenario generator includes a mechanical system (24) for simulating a mechanically perceptible traffic situation.

11. Installation according to any one of claims 6 to 10, characterised in that the detector device contains a camera trained on the learner driver and a monitor for visualisation and/or a recorder for recording the images received by the camera.

12. Installation according to any one of claims 6 to 11, characterised in that the error reporting device is wired up as a loudspeaker for delivering an acoustic error message, preferably a voice message, and/or as a display for delivering an optical error message.

13. Installation according to any one of claims 6 to 12, characterised in that the error reporting device is adapted to be totally or partially switched off and is adapted to be totally or partially switched on temporarily by the learner driver or an instructor.

14. Installation according to any one of claims 6 to 13, characterised in that the data processing device is connected via the communications network to a printer (210) in order to print out a written, numerical and/or graphic representation of the deviations.

15. Installation according to any one of claims 6 to 14, characterised in that it includes an instructor's station (200) which is connected to the training station (12) via the communications network.

16. Installation according to any one of claims 6 to 15, characterised in that the link between the instructor's station (200) and the training station (12) contains an intercom system (204).

17. Installation according to any one of claims 6 to 16, characterised in that the instructor's station (200) includes an indicating device (208) for the actuation of the operating means and/or for the error acknowledgements.

18. Installation according to any one of claims 6 to 17, characterised in that the printer (210) and/or the monitor (206) and recorder (207) are disposed in the instructor's station (200).

19. Installation according to any one of claims 6 to 18, characterised in that the instructor's station (200) is connected to the scenario generator in order to generate and/or to vary scenarios.

20. Installation according to any one of claims 6 to 19, characterised in that the instructor's station (200) is connected to the scenario generator in order to simulate vehicle defects, in particular vehicle defects which the learner driver is able to perceive on indicating instruments.

21. Installation (100) according to any one of claims 6 to 20, characterised in that it includes at least one additional training station (12) which is essentially configured like the first training station (12) and is connected to the instructor's station (200).

## Revendications

1. Procédé pour détecter le comportement d'un apprenti conducteur dans un véhicule d'apprentissage simulé, selon lequel l'apprenti conducteur actionne d'une manière simulée le véhicule d'apprentissage, dans une cabine de conducteur, tandis qu'un scénario, qui peut être perçu par l'apprenti conducteur, varie dans le temps et simule une situation de trafic, est produit, et dans lequel l'actionnement simulé est détecté et l'écart de l'actionnement simulé par rapport à un actionnement optimum correspondant au scénario prédéterminé et mémorisé est déterminé, caractérisé en ce
- que le scénario est établi avant la leçon, et
- que l'écart entre l'actionnement simulé et l'actionnement optimum est transmis à l'apprenti conducteur sous la forme d'une signalisation de faute juste après que la faute a été commise.

2. Procédé selon la revendication 1, caractérisé en ce qu'un instructeur est en liaison avec l'apprenti conducteur pour recevoir des informations concernant le scénario, l'apprenti conducteur et éventuellement la manoeuvre du véhicule d'apprentissage par l'apprenti conducteur et/ou les signalisations en retour de fautes.

3. Procédé selon la revendication 1, caractérisé en ce que le scénario est établi au moins en partie par l'instructeur.

4. Procédé selon l'une des revendications précédentes, caractérisé en ce que l'instructeur modifie le scénario pendant la leçon.

5. Procédé selon l'une des revendications précédentes, caractérisé en ce que l'instructeur est en liaison avec au moins un autre apprenti conducteur essentiellement de la même manière qu'avec l'apprenti conducteur mentionné en premier.

6. Installation pour détecter le comportement d'un apprenti conducteur dans un véhicule d'apprentissage simulé, comportant un poste d'entraînement pour l'apprenti conducteur, qui comprend une cabine de conducteur pourvue de moyens d'actionnement pour réaliser l'actionnement simulé du véhicule d'apprentissage et un générateur de scénarios pour simuler une situation de trafic qui peut être perçue par l'apprenti conducteur et varie dans le temps, et dans lequel le poste d'entraînement (12) comporte un dispositif de détection servant à détecter l'actionnement simulé respectif, et le dispositif de détection et le générateur de scénarios sont reliés par l'intermédiaire d'un réseau de communication à un dispositif de traitement de données du poste d'entraînement (12), de manière à envoyer au dispositif de traitement de données des premières informations, qui sont délivrées par le dispositif de détection et représentent l'actionnement détecté, et des secondes informations délivrées par le générateur de scénarios et représentant l'actionnement optimum respectif déjà connu, le dispositif de traitement de données comportant une unité de différenciation pour déterminer l'écart entre les premières informations et les secondes informations, caractérisée en ce
- que le poste d'entraînement peut être activé par l'apprenti conducteur,
- que le réseau de communication relie le dispositif de traitement de données à un dispositif de signalisation de fautes dans la zone de perception de l'apprenti conducteur, de manière à transmettre à l'apprenti conducteur l'écart déterminé, immédiatement après l'apparition de la faute, sous la forme d'une signalisation en retour de faute, et
- que le dispositif de traitement de données contient une unité de mémoire servant à mémoriser l'écart.

7. Installation selon la revendication 6, caractérisée en ce que le générateur de scénarios est relié à des moyens d'actionnement et peut être commandé au moins en partie au moyen de leur actionnement.

8. Installation selon l'une des revendications 6-7, caractérisée en ce que le générateur de scénarios comprend un système de projection (22A, 22B) pour simuler une situation de trafic pouvant être décelée optiquement.

9. Installation selon l'une des revendications 6-8, caractérisée en ce que le générateur de scénarios comprend un système acoustique servant à simuler une situation de trafic pouvant être décelée acoustiquement.

10. Installation selon l'une des revendications 6-9, caractérisée en ce que le générateur de scénarios comprend un système mécanique (24) pour simuler une situation de trafic pouvant être décelée mécaniquement.

11. Installation selon l'une des revendications 6-10, caractérisée en ce que le dispositif de détection contient une caméra dirigée vers l'apprenti conducteur ainsi qu'un moniteur pour visualiser et/ou un enregistreur pour enregistrer des images enregistrées par la caméra.

12. Installation selon l'une des revendications 6-11, caractérisée en ce que le dispositif de signalisation de fautes est raccordé en tant que haut-parleur pour la délivrance d'une signalisation acoustique, de préférence vocale, de fautes et/ou en tant que dispositif d'affichage pour la délivrance d'une signalisation optique de fautes.

13. Installation selon l'une des revendications 6-12, caractérisée en ce que le dispositif de signalisation de fautes peut être débranché complètement ou partiellement et peut être temporairement branché, complètement ou partiellement, par l'apprenti conducteur ou par un instructeur.

14. Installation selon l'une des revendications 6-13, caractérisée en ce que le dispositif de traitement de données est relié par l'intermédiaire du réseau de communication à une imprimante (210), servant à réaliser l'impression d'une représentation écrite, chiffrée et/ou imagée des écarts.

15. Installation selon l'une des revendications 6-14, caractérisée en ce qu'elle comprend un poste (200) pour instructeur, qui est relié au poste d'entraînement (12) par l'intermédiaire du réseau de communication.

16. Installation selon l'une des revendications 6-15, caractérisée en ce que la liaison entre le poste (200) pour l'instructeur et le poste d'entraînement (12) contient un interphone (215).

17. Installation selon l'une des revendications 6-16, caractérisée en ce que le poste (200) pour l'instructeur comprend un dispositif d'affichage (208) pour l'actionnement de moyens d'actionnement et/ou les signalisations en retour de fautes.

18. Installation selon l'une des revendications 6-17, caractérisée en ce que l'imprimante (210) et/ou le moniteur (206) ou l'enregistreur (207) sont disposés dans le poste (200) pour l'instructeur.

19. Installation selon l'une des revendications 6-18, caractérisée en ce que le poste (200) pour l'instructeur est relié à un générateur de scénarios de manière à produire et/ou modifier des scénarios.

20. Installation selon l'une des revendications 6-19, caractérisée en ce que le poste (200) pour l'instructeur est relié au générateur de scénarios de manière à simuler des défauts du véhicule, pouvant être décelés notamment sur des appareils d'affichage de l'apprenti conducteur.

21. Installation (100) selon l'une des revendications 6-20, caractérisée en ce qu'elle comprend au moins un autre poste d'entraînement (12), qui est agencé essentiellement de la même manière que le poste d'entraînement (12) indiqué en premier et est relié au poste (200) pour l'instructeur.
